(19) Europäisches Patentamt
European Patent Office
Office européen des brevets

(11) Veröffentlichungsnummer: **0 000 389**
**B1**

(12)
# EUROPÄISCHE PATENTSCHRIFT

(21) Anmeldenummer: **78100346.2**

(22) Anmeldetag: **11.07.78**

(51) Int. Cl.[3]: **C 08 G 18/18**

(54) **Verfahren zur Herstellung von Polyurethankunststoffen**

(30) Priorität: **16.07.77 DE 2732292**

(43) Veröffentlichungstag der Anmeldung:
**24.01.79 Patentblatt 79/02**

(45) Bekanntmachung des Hinweises auf die Patenterteilung:
**06.08.80 Patentblatt 80/16**

(84) Benannte Vertragsstaaten:
**BE DE FR GB NL SE**

(56) Entgegenhaltungen:
**FR - A - 1 445 579**
**FR - A - 2 085 965**

(73) Patentinhaber: **Bayer AG**
**Zentralbereich Patente, Marken Und Lizenzen**
**D - 5090 Leverkusen 1, Bayerwerk**
**(DE)**

(72) Erfinder: **Haas, Peter, Dr.**
**Ohligser Strasse 118**
**D - 5657 Haan 1**
**(DE)**
**Blahak, Johannes, Dr.**
**Andreas - Gryphius - Strasse 7**
**D - 5000 Köln 80**
**(DE)**
**Mormann, Werner, Dr.**
**Odenthaler Strasse 62**
**D - 5090 Leverkusen 1**
**(DE)**
**Kapps, Manfred, Dr.**
**Hoppersheiderweg 55**
**D - 5060 Bergisch-Gladbach 2**
**(DE)**

**EP 0 000 389 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Herstellung von Polyurethankunststoffen

Die vorliegende Erfindung betrifft ein Verfahren zur Herstellung von Polyurethankunststoffen, vorzugsweise Schaumstoffen, unter Verwendung neuartiger, tertiäre Stickstoffatome aufweisender Katalysatoren, die in das Polyurethan eingebaut werden und gleichzeitig als Alterungs- und Lichtschutzmittel wirken.

Polyurethanschaumstoffe mit den verschiedensten physikalischen Eigenschaften werden nach dem bekannten Isocyanatpolyadditionsverfahren aus Verbindungen mit mehreren aktiven Wasserstoffatomen, insbesondere Hydroxyl- und/oder Carboxylgruppen enthaltenden Verbindungen, und Polyisocyanaten, unter Mitverwendung von Wasser und/oder Treibmitteln und gegebenenfalls Katalysatoren, Emulgatoren und anderen Zusatzstoffen,seit langem in technischem Maßstab hergestellt (Angew. Chem. A, *59* (1948), S. 257). Bei geeigneter Wahl der Komponenten werden entweder elastische oder starre Schaumstoffe bzw. auch alle zwischen diesen Extremen liegenden Produkte erhalten.

Polyurethanschaumstoffe werden bevorzugt aus flüssigen Ausgangskomponenten hergestellt, wobei die miteinander umzusetzenden Ausgangsmaterialien entweder in einem Einstufenverfahren zusammengemischt werden oder aber zunächst ein NCO-Gruppen aufweisendes Voraddukt aus einem Polyol und einem Überschuß an Polyisocyanat hergestellt wird, das dann, z.B. durch Reaktion mit Wasser, verschäumt wird.

Als Katalysatoren haben sich bei der Herstellung von Polyurethanschaumstoffen tertiäre Amine vor allem deshalb bewährt, weil sie sowohl die Reaktion zwischen Hydroxylbzw. Carboxylgruppen und NCO-Gruppen (Urethanreaktion) als auch die Reaktion zwischen Wasser und Isocyanaten (Treibreaktion) beschleunigen, wobei auch beim Einstufenverfahren ("one-shot") die Geschwindigkeiten der nebeneinander ablaufenden beiden Reaktionen aufeinander abgestimmt werden können.

Neben den bereits erwähnten Reaktionen laufen beim Verschäumungsprozeß noch zusätzliche Vernetzungsreaktionen unter Ausbildung von Allophanat-, Biuret- und Cyanuratstrukturen ab.

In Anbetracht dieser Vielzahl von Reaktionen ist es erforderlich, den Katalysator so zu wählen, daß einerseits der synchrone Ablauf der Reaktionen gewährleistet ist und andererseits der Katalysator nicht zu früh durch Einbau in den Schaum fixiert wird oder später den hydrolytischen Abbau des fertigen Schaumes beschleunigt. Dieses Problem ist bis jetzt noch nicht voll zufriedenstellend gelöst. Darüber hinaus ist der unangenehme Geruch vieler in der Praxis verwendeter tertiärer Amine von Nachteil. Außerdem neigen Polyurethanschäume auch in Gegenwart der technisch meist verwendeten Aminkatalysatoren wie z.B. Dabco® oder Bis-(dialkylaminoalkyl)-äthern (DOS 1 804 361 und US-Patentschrift 3 330 782) für sich oder auch laminiert mit gefärbten Kunststoffolien (z.B. PVC-Folien) zur Vergilbung bzw. Verfärbung und Schwärzung bei thermischer Belastung bzw. Lichteinwirkung. Besonders störend ist dabei die Schwärzung von gefärbten Kunststoffolien, wie sie zur Verkleidung von Polyurethanschaumstoffen technisch z.B. bei Automobilsitzen, Külschränken und Elektrogeräten verwendet werden. Diese nachteiligen Effekte versperren den Polyurethanschäumen und Polyurethankunststoffen viele sonst mögliche Anwendungsgebiete.

Überraschenderweise wurden nun Katalysatoren gefunden, die für sich oder im Gemisch mit bekannten Aminkatalysatoren Verfärbungen von hinterschäumten Kunststoffolien (z.B. PVC-Folien) unter thermischer Belastung und/oder Lichteinwirkung ebenso verhindern, wie Alterungseffekte bei freigeschäumten Polyurethankunststoffen.

Gegenstand der vorliegenden Erfindung ist ein Verfahren zur herstellung von gegebenenfalls zellförmigen Polyurethankunststoffen durch Umsetzung von

(a) Polyisocyanaten mit

(b) Verbindungen mit mindestens 2 gegenüber Isocyanaten reaktionsfähigen Wasserstoffatomen, in Gegenwart von

(c) tertiären Aminen, welche gegenüber Isocyanaten reaktionsfähige Wasser stoffatome aufweisen, als Katalysatoren, gegebenenfalls unter Mitverwendung von

(d) Treibmitteln, Stabilisatoren und weiteren an sich bekannten Zusatzstoffen,

welches dadurch gekennzeichnet ist, daß als Komponente (c)

(A) Verbindungen der allgemeinen Formel

(1) 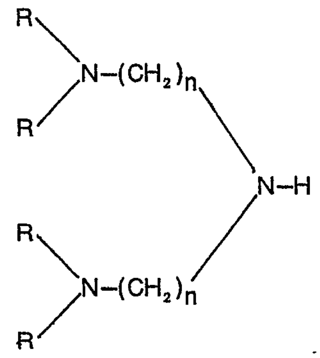

und/oder

(2) 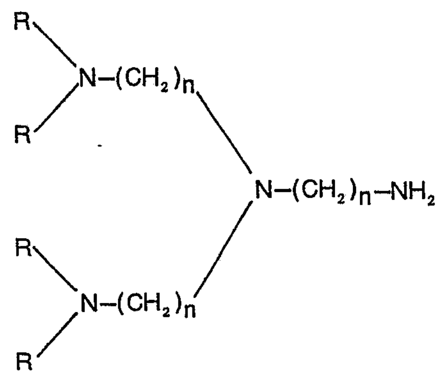

und/oder

(3) 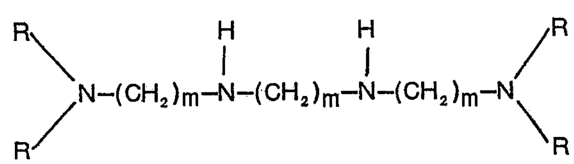

und/oder

(4) 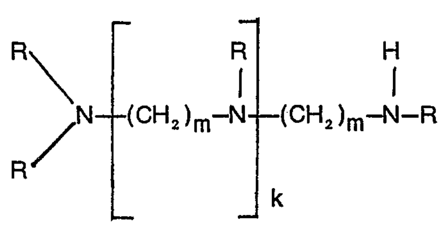

gegebenenfalls in Gemisch mit bis zu 97 Mol-%, bezogen auf Gesamtmenge an katalysator, an anderen tertiären Aminen (B) als Co-Katalysator, eingesetzt werden, wobei

die Reste R unabhängig voneinander gegebenenfalls verzweigte Alkylgruppen mit 1—4 C-Atomen, vorzugsweise Methylgruppen, darstellen,

die Zahlen n unabhängig voneinander für 2 oder 3, vorzugsweise für 3,

die Zahlen m unabhängig voneinander für 2 oder 3, vorzugsweise für 2, und

k für eine ganze Zahl zwischen 1 und 5 stehen.

In der FR - A 2 085 965 werden ebenfalls Polyurethankatalysatoren beschrieben, welche neben einem tertiären Stickstoffatom eine gegenüber Isocyanaten reaktive Gruppe aufweisen. Diese Katalysatoren entsprechen der allgemeinen Formel

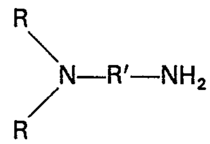

in welcher die beiden Reste R unabhängig für Alkylreste oder zusammen mit dem Stickstoffatom für einen heterocyclischen Rest stehen und R′ einen zweiwertigen organischen Rest, vorzugsweise eine Alkylengruppe mit 2 bis 10 C-Atomen bedeutet. Diese Katalysatoren werden vorzugsweise in Kombination mit Triäthylendiamin eingesetzt. Es zeigt sich jedoch, daß derartige Katalysatorkombinationen das obenbeschriebene Problem der Verfärbung von mit Polyurethanschaum laminierten Kunststoff-Folien bei thermischer Belastung bzw. Lichteinwirkung nicht zu lösen vermögen.

Erfindungsgemäß bevorzugt sind als Katalysatoren (A) Verbindungen der allgemeinen Formel (1) und (2).

Die durch die allgemeinen Formeln (1) bis (4) gekennzeichneten Katalysatoren nehmen durch ihre stabilisierende Wirkung gegen thermische und photochemische Alterung eine Sonderstellung gegenüber den bisher verwendeten tertiären Aminen ein. Dies ist vermutlich darauf zurückzuführen daß sie trotz ihres Gehaltes an aktiven Wasserstoffatomen — bedingt durch sterische Hinderung — nur sehr langsam beim Schaümprozeß in das Polyurethan eingebaut werden. Dadurch können sie überraschenderweise an den Phasengrenzflächen ihre stabilisierende Wirkung entfalten.

Im erfindungsgemäßen Verfahren können neben den Verbindungen (A) der allgemeinen Formel (1) bis (4) an sich bekannte Aminkatalysatoren (B) in einer Menge von 3 bis 97 Mol-%, vorzugsweise 10 bis 90 Mol.-%, besonders bevorzugt 30 bis 70 Mol.-%, bezogen auf Gesamtmenge an Katalysator, mitverwendet werden, beispielsweise Äthergruppen aufweisende tertiäre Amine gemäß US-Patentschrift 3 330 782, DAS 1 030 558 oder DOS 1 804 361 oder die äthergruppenfreien, mindestens 4 tertiäre Stickstoffatome aufweisenden Katalysatoren von DOS 2 624 527 und DOS 2 624 528. Als Co-Katalysatoren (B) sind jedoch erfindungsgemäß Verbindungen bevorzugt, welche neben mindestens einem tertiären Stickstoffatom mindestens eine Amidgruppe, insbesondere eine Formamidgruppe enthalten. Derartige acylierte Amine werden in der DOS 2 523 633 eingehend beschrieben. Erfindungsgemäß besonders bevorzugt sind in diesem Zusammenhang die Formylierungsprodukte der Verbindungen (A) der allgemeinen Formel (1) bis (4) sowie die Verbindungen

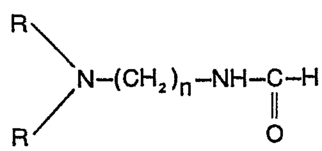

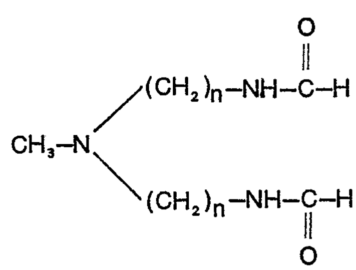

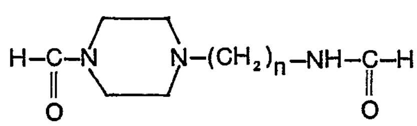 und

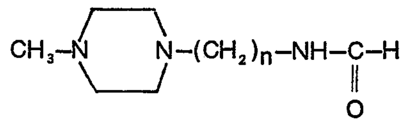

wobei R und n die oben angegebene Bedeutung haben.

Beispiele für erfindungsgemäß zu verwendende Katalysatoren bzw. Co-Katalysatoren sind die folgenden tertiären Amine:

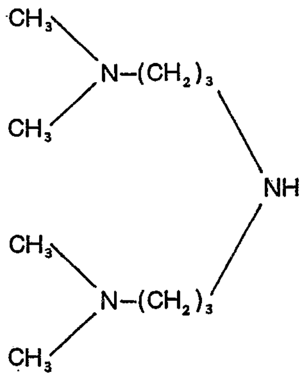

(bevorzugt)

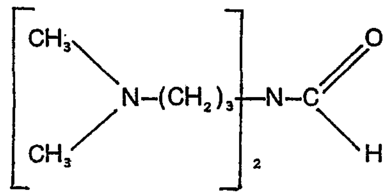

(bevorzugt)

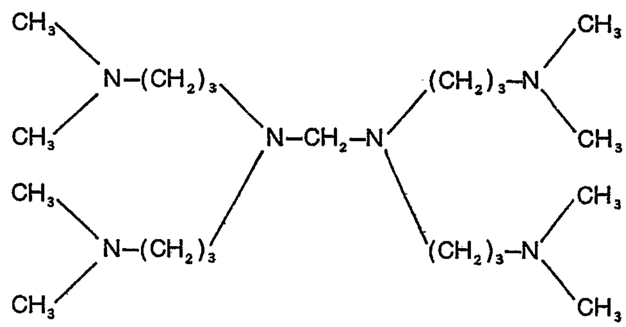

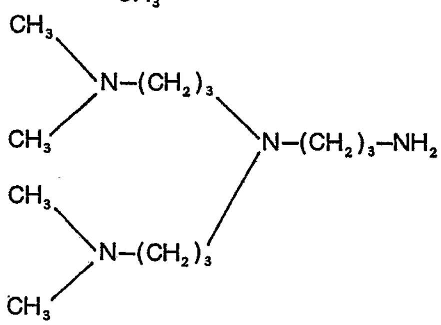

(bevorzugt)

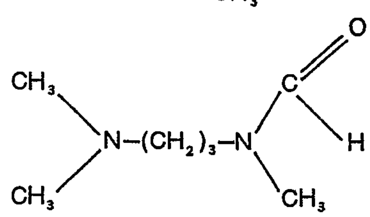

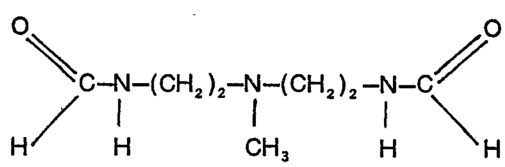

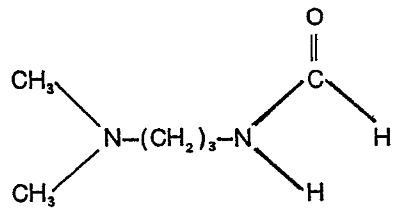 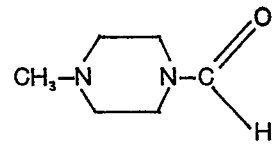

(bevorzugt)

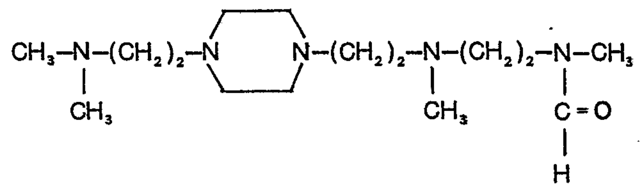

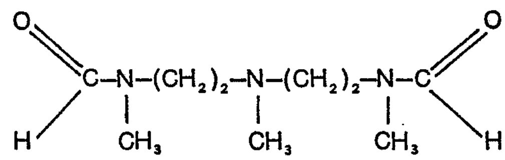

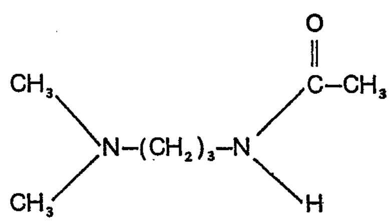 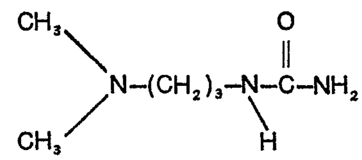

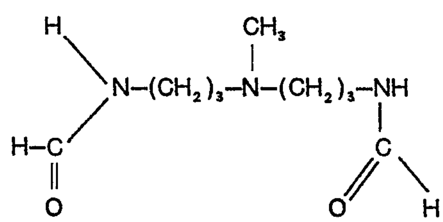 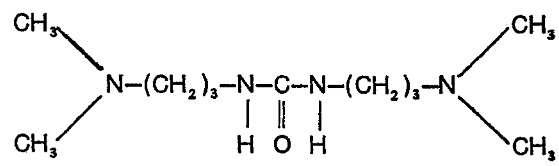

Die erfindungsgemäß zu verwendenden Katalysatoren können in an sich bekannter Weise hergestellt werden, wie beispielsweise in der DAS 1 154 269, der DOS 2 523 633 und in "Die Angewandte Makromolekulare Chemie" *34,* S. 111—132 (1973), sowie von F. Möller in Houben - Weyl, XI/2 (S. 27—29) beschrieben.

Erfindungsgemäß werden in der Regel insgesamt 0,01—5 Gew.-%, vorzugsweise 0,1—3 Gewichtsprozent, bezogen auf gesamtes Reaktionsgemisch, an Katalysator eingesetzt.

Als erfindungsgemäß einzusetzende Ausgangskomponenten kommen aliphatische, cycloaliphatische, araliphatische, aromatische und heterocyclische Polyisocyanate in Betracht, wie sie z.B. von W. Siefken in Justus Liebgs Annalen der Chemie, 562, Seiten 75 bis 136, beschrieben werden, beispielsweise Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DAS 1 202 785, amerikanische Patentschrift 3 401 190), 2,4- und 2,6-hexahydrotoluylendiisocyanat sowie beliebige Gemische dieser Isomeren, Hexahydro-1,3- und/oder -1,4-phenylen - diisocyanat, Perhydro-2,4'- und/oder -4,4'-diphenylmethan - diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen - 1,5 - diisocyanat, Triphenylmethan - 4,4',4'' - triisocyanat,

Polyphenyl - polymethylen - polyisocyanate, wie sie durch Anilin - Formaldehyd - Kondensation und anschließende Phosgenierung erhalten und z.B. in den britischen Patentschriften 874 430 und 848 671 beschrieben werden, m- und p-Isocyanatophenyl - sulfonyl - isocyanate gemäß der amerikanischen Patentschrift 3 454 606, perchlorierte Arylpolyisocyanate, wie sie z.B. in der deutschen Auslegeschrift 1 157 601 (amerikanische Patentschrift 3 277 138) beschrieben werden, Carbodiimidgruppen aufweisende Polyisocyanate, wie sie in der deutschen Patentschrift 1 092 007 (amerikanische Patentschrift 3 152 162) beschrieben werden, Diisocyanate, wie sie in der amerikanischen Patentschrift 3 492 330 beschrieben werden, Allophanatgruppen aufweisende Polyisocyanate, wie sie z.B. in der britischen Patentschrift 994 890, der belgischen Patentschrift 761 626 und der veröffentlichten holländischen Patentanmeldung 7 102 524 beschrieben werden, Isocyanuratgruppen aufweisende Polyisocyanate, wie sie z.B. in der amerikanischen Patentschrift 3 001 973, in den deutschen Patentschriften 1 022 789, 1 222 067 und 1 027 394 sowie im den deutschen Offenlegungsschriften 1 929 034 und 2 004 048 beschrieben werden, Urethangruppen aufweisende Polyisocyanate, wie sie z.B. in der belgischen Patentschrift 752 261 oder in der amerikanischen Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z.B. in der deutschen Patentschrift 1 101 394 (amerikanische Patentschriften 3 124 605 und 3 201 372) sowie in der britischen Patentschrift 889 050 beschrieben werden, durch Telomerisationsreaktionen hergestellte Polyisocyanate, wie sie z.B. in der amerikanischen Patentschrift 3 654 106 beschrieben werden, Estergruppen aufweisende Polyisocyanate, wie sie zum Beispiel in den britischen atentschriften 965 474 und 1 072 956, in der amerikanischen Patentschrift 3 567 763 und in der deutschen Patentschrift 1 231 688 genannt werden, Umsetzungsprodukte der obengenannten Isocyanate mit Acetalen gemäß der deutschen Patentschrift 1 072 385 und polymere Fettsäurereste enthaltende Polyisocyanate gemäß der amerikanischen Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einsusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl - polymethylen - polyisocyanate, wie sie durch Anilin - Formaldehyd - Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate").

Erfindungsgemäß einzusetzende Ausgangskomponenten sind ferner Verbindungen mit mindestens zwei genenüber Isocyanaten reaktionsfähigen Wasserstoffatomen von einem Molekulargewicht in der Regel von 400—10 000. Hierunter versteht man neben Aminogruppen, Thiolgruppen oder Carboxylgruppen aufweisenden Verbindungen vorzugsweise Polyhydroxylverbindungen, insbesondere zwei bis acht Hydroxylgruppen aufweisende Verbindungen, speziell solche vom Molekulargewicht 800 bis 10 000, vorzugsweise 1000 bis 6000, z.B. mindestens zwei, in der Regel 2 bis 8, vorzugsweise aber 2 bis 4, Hydroxylgruppen aufweisende Polyester, Polyäther, Polythioäther, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit merwertigen, vorzugsweise zweiwertigen, Carbonsäuren. Anstelle der freien Polycarbonsäuren können auch die entsprechenden Polycarbonsäureanydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele hierfür seien genannt: Bernsteinsäure, Adipinsäure, Korksaüre, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester und Terephthalsäure - bis - glykolester. Als mehrwertige Alkohole kommen z.B. Äthylenglykol, Propylenglykol - (1,2) und -(1,3), Butylenglykol - (1,4) und -(2,3), Hexandiol - (1,6), Octandiol - (1,8), Neopentylglykol, Cyclohexandimethanol (1,4 - Bis - hydroxymethylcyclohexan), 2 - Methyl - 1,3 - propandiol, Glycerin, Trimethylol - propan, Hexantriol - (1,2,6), Butantriol - (1,2,4), Trimethyloläthan, Pentaerythrit, Chinit, Mannit und Sorbit, Methylglykosid, ferner Daïthylenglykol, Triäthylenglykol, Tetraäthylenglykol, Polyäthylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. ε-Caprolacton oder Hydroxycarbonsäuren, z.B. ω-Hydroxycapronsäure, sind einsetzbar.

Auch die erfindungsgemäß in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol - (1,3) oder -(1,2), Trimethylolpropan, 4,4' - Dihydroxy - diphenylpropan, Anilin, Äthanolamin oder Äthylendiamin hergestellt. Auch Sucrosepolyäther, wie sie z.B. in den deutschen Auslegeschriften 1 176 358 und 1 064 938 beschrieben werden, kommen erfindungsgemäß in Frage. Vielfach sind solche Polyäther bevorzugt, die überwiegend (bis zu 90 Gew.-%, bezogen auf alle vorhandenen OH - Gruppen im Polyäther) primäre OH-Gruppen aufweisen. Auch durch Vinylpolymerisate modifizierte Polyäther, wie sie z.B. durch Polymerisation von Styrol und Acrylnitril in Gegenwart von Polyäthern entstehen (amerikanische Patentschriften 3 383 351, 3 304 273, 3 523 093, 3 110 695, deutsche Patentschrift 1 152 536), sind geeignet, ebenso OH-Gruppen aufweisende Polybutadiene.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischäther, Polythioätherester oder Polythioätheresteramide.

Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol - (1,3), Butandiol - (1,4) und/oder Hexandiol - (1,6), Diäthylenglykol, Triäthylenglykol oder Tetraäthylenglykol mit Diarylcarbonaten, z.B. Diphenylcarbonat, oder Phosgen hergestellt werden können.

Zu den Polyesteramiden und Polyamiden zählen z.B. die aus mehrwertigen gesättigten und ungesättigten Carbonsäuren bzw. Deren Anhydriden und mehrwertigen gesättigten und ungesättigten Aminoalkoholen, Diaminen, Polyaminen und ihren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl, Kohlenhydrate oder Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

Vertreter dieser erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32—42 und Seiten 44—54 und Band II, 1964, Seiten 5—6 und 198—199, sowie im Kunststoff-Handbuch, Band VII, Vieweg-Höchtlen, Carl-Hanser-Verlag, München, 1966, z.B. auf den Seiten 45—71, beschrieben.

Selbstverständlich können Mischungen der obengenannten Verbindungen mit mindestens zwei gegenüber Isocyanaten reaktionsfähigen Wasserstoffatomen mit einem Molekular-gewicht von 400 - 10 000, z.B. Mischungen von Polyäthern und Polyestern, eingesetzt werden.

Als erfindungsgemäß - gegebenenfalls im Gemisch mit den genannten höhermolekularen Verbindungen - einzusetzende Ausgangskomponenten kommen auch Verbindungen mit mindestens zwei gegenüber Isocyanaten reaktionsfähigen Wasserstoffatomen von einem Molekulargewicht 32—400 in Frage. Auch in diesem Fall versteht man hierunter Hydroxylgruppen und/oder Aminogruppen und/oder Thiolgruppen und/oder carboxylgruppen aufweisende Verbindungen, vorzugsweise Hydrozylgruppen und/oder Aminogruppen aufweisende Verbindungen, die als Kettenverlängerungsmittel oder Vernetzungsmittel dienen. Diese Verbindungen weisen in der Regel 2 bis 8 gegenüber Isocyanaten reaktionsfähige Wasserstoffatome auf, vorzugsweise 2 oder 3 reaktionsfähige Wasserstoffatome.

Als Beispiele für derartige Verbindungen seien genannt: Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Glyzerin, Trimethylolpropan, Hexantriol-(1,2,6), Trimethyloläthan, Pentaerythrit, Chinit, Mannit und Sorbit, Diäthylenglykol, Triäthylenglykol, Tetraäthylenglykol, Polyäthylenglykole mit einem Molekulargewicht bis 400, Dipropylenglykol, Polypropylenglykole mit einem Molekulargewicht bis 400, Dibutylenglykol, Polybutylenglykole mit einem Molekulargewicht bis 400, 4,4'-Dihydroxydiphenylpropan, Di-hydroxymethyl-hydrochinon, Äthanolamin, Diäthanolamin, Triäthanolamin, 3-Aminopropanol, Äthylendiamin, 1,3-Diaminopropan, 1-Mercapto-3-aminopropan, 4-Hydroxy- oder -Amino-phthalsäure, Bernsteinsäure Adipinsäure, Hydrazin, N,N'-Dimethylhydrazin, 4,4'-Diaminodiphenylmethan, Toluylendiamin, Methylenbis-chloranilin, Methylen-bis-anthranilsäureester Diaminobenzoesäureester und die isomeren Chlorphenylendiamine.

Auch in diesem Fall können Mischungen von verschiedenen Verbindungen mit mindestens zwei

gegenüber Isocyanaten reaktionsfähigen Wasserstoffatomen mit einem Molekulargewicht von 32—400 verwendet werden.

Erfindungsgemäß können jedoch auch Polyhydroxylverbindungen eingesetzt werden, in welchen hochmolekulare Polyaddukte bzw. Polykondensate in feindisperser oder gelöster Form enthalten sind. Derartige modifizierte Polyhydroxylverbindungen werden erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) direkt in situ in den oben genannten, Hydroxylgruppen aufweisenden Verbindungen ablaufen läßt. Derartige Verfahren sind beispielsweise in den Deutschen Auslegeschriften 1 168 075 und 1 260 142, sowie den Deutschen Offenlegungsschriften 2 324 134, 2 423 984, 2 512 385, 2 513 815, 2 550 796, 2 550 797, 2 550 833 und 2 550 862 beschrieben. Es ist aber auch möglich, gemäß US-Patent 3 869 413 bzw. Deutscher Offenlegungsschrift 2 550 860 eine fertige wäßrige Polymerdispersion mit einer Polyhydroxylverbindung zu vermischen und anschließend aus dem Gemisch das Wasser zu entfernen.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Erfindungsgemäß können Wasser und/oder leicht flüchtige organische Substanzen als Treibmittel mitverwendet werden. Als organische triebmittel kommen z.B. Aceton, Äthylacetat, halogensubstituierte Alkane wie Methylen-chlorid, Chloroform, Äthyliden-chlorid, Vinylidenchlorid, Monofluortrichlormethan, Chlordifluormethan, Dichlordifluormethan, ferner Butan, Hexan, Heptan oder Diäthyläther infrage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

Erfindungsgemäß können selbstverständlich auch weitere an sich bekannte Katalysatoren mitverwendet werden, z.B. tertiäre Amine, wie Triäthylamin, Tributylamin, N-Methyl-morpholin, N-Äthylmorpholin, N-Cocomorpholin, N,N,N',N'-Tetramethyl-äthylendiamin, 1,4-Diaza-bicyclo-(2,2,2)-octan, N-Methyl-N'-dimethyl-aminoäthyl-piperazin, N,N-Dimethylbenzylamin, Bis-(N,N-diäthylaminoäthyl)-adipat, N,N-Diäthylbenzylamin, Pentamethyl-diäthylentriamin, N,N-Dimethylcyclohexylamin, N,N,N',N'-Tetramethyl-1,3-butandiamin, N,N-Dimethyl-$\beta$-phenyläthylamin, 1,2-Dimethylimidazol und 2-Methylimidazol. Als zusätzliche Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol in Frage.

Gegenüber Isocyanatgruppen aktive Wasserstoffatome aufweisende tertiäre Amine als Katalysatoren sind z.B. Triäthanolamin, Triisopropanolamin, N-Methyldiäthanolamin, N-Äthyldiäthanolamin, N,N-Dimethyl-äthanolamin, sowie deren Umsetzungsprodukte mit Alkylenoxiden, wie Propylenoxid und/oder Äthylenoxid.

Als zusätzliche Katalysatoren kommen ferner Silaamine mit Kohlenstoff-Silizium-Bindungen, wie sie z.B. in der deutschen Patentschrift 1 229 290 (entsprechend der amerikanischen Patentschrift 3 620 984) beschrieben sind, in Frage, z.B. 2,2,4-Trimethyl-2-silamorpholin und 1,3-Diäthylaminomethyltetramethyl-disiloxan.

Als zusätzliche Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden.

Erfindungsgemäß können auch organische Metallverbindungen, insbesondere organische Zinnverbindungen, als Katalysatoren mitverwendet werden.

Als organische Zinnverbindungen kommen vorzugsweise Zinn(II)-salze von Carbonsäuren wie Zinn(ii)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht, Selbstverständlich können alle obengenannten Katalysatoren als Gemische eingesetzt werden.

Weitere Vertreter von erfindungsgemäß gegebenenfalls zu verwendenden Katalysatoren sowie Einzelheiten über die Wirkungsweise der Katalysatoren sind im Kunststoff-Handbuck, Band VII, herausgegeben von Vieweg und Höchtlen, Carl-Hanser-Verlag, München 1966, z.B. auf den Seiten 96 bis 102 beschrieben.

Erfindungsgemäß können auch oberflächenaktive Zusatzstoffe, wie Emulgatoren und Schaumstabilisatoren, mitverwendet werden.

Als Emulgatoren kommen z.B. die Natriumsalze von Ricinusölsulfonaten oder Salze von Fettsäuren mit Aminen wie ölsaures Diäthylamin oder stearinsaures Diäthanolamin infrage. Auch Alkali- oder Ammoniumsalze von Sulfonsäuren wie etwa von Dodecylbenzolsulonsäure oder Dinaphthylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyäthersiloxane, speziell wasserlösliche Vertreter, infrage. Diese Verbindungen sind im allgemeinen so aufgebaut, daß ein Copolymerisat aus Äthylenoxid und Propylenoxid mit einem Polydimethylsiloxanrest verbunden ist. Derartige Schaumstabilisatoren sind z.B. in den amerikanischen Patentschriften 2 834 748, 2 917 480 und 3 629 308 beschrieben.

Erfindungsgemäß können ferner auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. tris-chloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide mitverwendet werden.

Weitere Beispiele von gegebenenfalls erfindungsgemäß mitzuverwendenden oberflächenaktiven Zusatzstoffen und Schaumstabilizatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der amerkanischen Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung wird erfindungsgemäß die Verschäumung oft in Formen durchgeführt. Dabei wird das Reaktionsgemisch in eine Form eingetragen. Als Form-material kommt Metall, z.B. Aluminium, oder Kunststoff, z.B. Opoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstuktur aufweist, es kann aber auch so durchgeführt werden, daß das Formteil eine kompakte Haut und einen zelligen Kern aufweist. Erfindungsgemäß kann man in diesem Zusammenhang so vergehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemsich in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den amerikanischen Patentschriften 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den deutschen Offenlegungsschriften 2 121 670 und 2 307 589 bekanntgeworden sind.

Erfindungsgemäß lassen sich auch kalthärtende Schaumstoffe herstellen (vgl. britische Patentschrift 1 162 517, deutsche Offenlegungsschrift 2 153 086).

Selbstverständlich können aber auch Schaumstoffe durch Blockverschäumung oder nach dem an sich bekannten Doppeltransportbandverfahren hergestellt werden.

Die Verfahrensprodukte sind vorzugsweise flexible, semiflexible oder harte Polyurethanschaumstoffe. Sie finden die an sich bekannte Verwendung für derartige Produkte, z.B. als Matratzen und Polsterungsmaterial in der Möbel- und Automobilindustrie, ferner zur Herstellung von Armaturen, wie sie in der Automobil- industrie angewendet werden und schließlich als Dämmittel und Mittel zur Wärme- bzw. Kälteisolierung, z.B. im Bausektor oder in der Kühlöbelindustrie.

Die folgenden Beispiele erläutern das erfindungsgemäße Verfahren, ohne es zu begrenzen. Wenn nicht anders vermerkt, sind Mengenangaben als Gewichtsteile bzw. Gewichtsprozente zu verstehen.

## Beispiel 1

100 g einer Mischung aus 100 Teilen eines auf Trimethylolpropan gestarteten Copolyäthers mit einem mittleren Molekulargewicht von 4800 aus 87% Propylenoxid und 13% Äthylenoxid

2 Teilen Triäthanolamin,

2,3 Teilen Wasser und

1,2 Teilen eines Gemsiches aus gleichen Gweichtsanteilen an Bis-(dimethylamino-n-propyl)-amin und N-Methyl-N'-(3-formylaminopropyl) - piperazin

werden mit 46 g des Phosgenierungsprodukts eines technischen Anilin-Formaldehyd-Kondensats (Viskosität: 200 cP bei 25°C) intensiv verührt. Man deckt den so erhaltenen Schaumstoff teilweise mit einer grün eingefärbten PVC-Folie ab und lagert bei 100°C im Trockenschrank. Die Lichtechtheit des freigeschäumten Produktes wird gesondert in Anlehnung an DIN 54 004 bestimmt.

Vergleichsbeispiel 1a:

Beispiel 1 wird wiederholt, jedoch unter Verwendung von 1,2 Teilen Tetramethyl-äthylendiamin anstelle des erfindungsgemäßen Katalysatorgemisches.

Vergleichsbeispiel 1b:

Beispiel 1 wird wiederholt, jedoch unter Verwendung von 1,2 Teilen N-Dimethylamino-N'-(2-dimethylamino-propionyl)-aminal anstelle des erfindungsgemäßen Katalysatorgemisches.

Vergleichsbeispiel 1c:

Beispiel 1 wird wiederholt, jedoch unter Verwendung von 1,2 Teilen eines Gemisches von gleichen Teilen Triäthylendiamin und 3-Dimethylamino-1-propylamin anstelle des erfindungsgemäßen Katalysatorgemisches.

Die Ergebnisse der Versuche sind in der folgenden Tabelle zusammengefaßt.

| Beispiel | Farbe der PVC—Folie nach einer Ausheizzeit bei 100°C von | | | Lichtechtheit (DIN 54 004) |
|---|---|---|---|---|
| | 120 h | 165 h | 192 h | |
| 1 | unverändert | unverändert | unverändert | 6–7 |
| 1a | oliv | braun | schwarz | 3 |
| 1b | unverandert | oliv | braun | 5 |
| 1c | Rand verdunkelt | gesamte Folie verdunkelt | schwarz | |

Beispiel 2

Es wird vorgegangen wie in Beispiel 1 beschrieben, jedoch mit 1,2 Teilen Bis-(3-dimethylamino-n-propyl)-amin gearbeitet.

Man erhält folgende Ergebnisse:

| | | | |
|---|---|---|---|
| Ausheizzeit bei 100°C | 120 h | 165 h | 192 h |
| Farbe der PVC-Folie | unverändert | unverändert | unverändert |
| Lichtechtheit (DIN 54 004) | 7 | | |

Beispiel 3

Es wird vorgegangen wie in Beispiel 1 beschrieben, jedoch mit 1,2 Teilen N,N-Bis-(3-dimethylamino-n-propyl)-propylendiamin gearbeitet.

| | | | |
|---|---|---|---|
| Ausheizzeit bei 100°C | 120 h | 165 h | 192 h |
| Farbe der PVC-Folie | unverändert | unverändert | helloliv |
| Lichtechtheit (DIN 54 004) | 6 | | |

Beispiel 4

Es wird vorgegangen wie in Beispiel 1 beschrieben, jedoch mit 1,2 Teilen eines Gemisches aus gleichen Gewichtsteilen Bis-(3-dimethylamino-n-propyl)-amin und 1-N-Formyl-4-N-(2-formyl-amino-äthyl)-piperazin gearbeitet.

Man erhält folgende Ergebnisse:

| | | | |
|---|---|---|---|
| Ausheizzeit bei 100°C | 120 h | 165 h | 192 h |
| Farbe der PVC-Folie | unverändert | unverändert | unverändert |
| Lichtechtheit (DIN 54 004) | 6—7 | | |

## Beispiel 5

Es wird vorgegangen wie in Beispiel 1 beschrieben, jedoch mit 1,2 Teilen eines Gemisches aus gleichen Gewichtsteilen Bis-(3-dimethylamino-n-propyl)-amin und Methyl-bis-(3-N-formylamino propyl)-amin gearbeitet.

Man erhält folgendes Ergebnis der thermischen und photochemischen Alterungsversuche:

| | | | |
|---|---|---|---|
| Ausheizzeit bei 100°C | 120 h | 165 h | 192 h |
| Farbe der PVC-Folie | unverändert | unverändert | helloliv |
| Lichtechtheit (DIN 54 004) | 6 | | |

## Beispiel 6

Es wird vorgangen wie in Beispiel 1 beschrieben, jedoch mit 1,2 Teilen eines Gemisches aus gleichen Gewichtsteilen Bis-(3-dimethylamino-n-propyl)-amin und Dimethylamino-n-propyl-formamid gearbeitet. Man erhält folgende Ergebnisse:

| | | | |
|---|---|---|---|
| Ausheizzeit bei 100°C | 120 h | 165 h | 192 h |
| Farbe der PVC-Folie | unverändert | unverändert | unverändert |
| Lichtechtheit (DIN 54004) | 6—7 | | |

**Patentansprüche**

1. Verfahren zur Herstellung von gegebenenfalls zellförmigen Polyurethankunststoffen durch Umsetzung von

(a) Polyisocyanaten mit

(b) Verbindungen mit mindestens 2 gegenüber Isocyanaten reaktionsfähigen Wasserstoffatomen, in Gegenwart von

(C) tertiären Aminen, welche gegenüber Isocyanaten reaktionsfähige Wasserstoffatome aufweisen, als Katalysatoren, gegebenenfalls unter Mitverwendung von

(d) Treibmitteln, Stabilisatoren und weiteren an sich bekannten Zusatzstoffen,

dadurch gekennzeichnet, daß als Komponente (c)

(A) Verbindungen der allgemeinen Formel

(1) 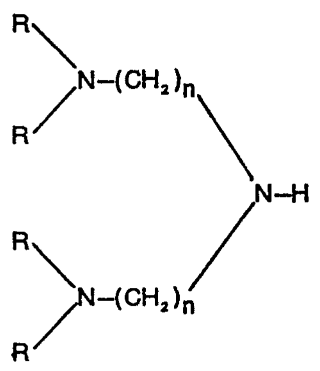

und/oder

(2) 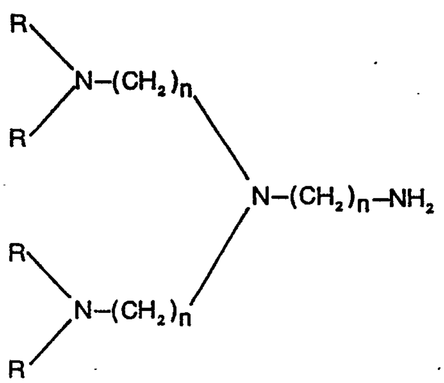

und/oder

(3) 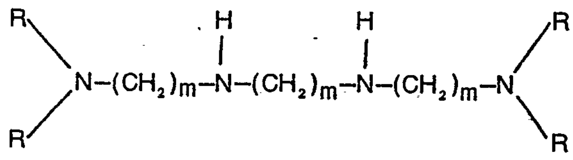

und/oder

(4) 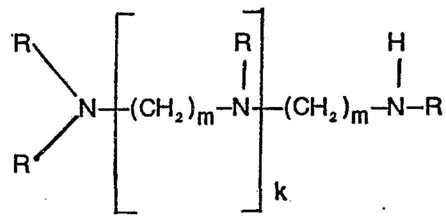

gegebenenfalls im Gemisch mit bis zu 97 Mol-%, bezogen auf gesamtes Katalysatorgemisch, an weiteren tertiären Aminen (B), eingesetzt werden, wobei

die Reste R unabhängig voneinander gegebenenfalls verzweigte Alkylgruppen mit 1—4 C-Atomen darstellen
die Zahlen n unabhängig voneinander für 2 oder 3,
die Zahlen m unabhängig voneinander für 2 oder 3 und
k für eine ganze Zahl zwischen 1 und 5 stehen.

2. Verfahren nach Anspruch 1, dadurch gekennzeichnet, daß 30 bis 70 Mol.-%, bezogen auf gesamtes Katalysatorgemisch, an Co-Katalysatoren (B) mitverwendet werden.

3. Verfahren nach Anspruch 1 oder 2, dadurch gekennzeichnet, daß als Co-Katalysator (B) Verbindungen mit mindestens einem tertiären Stickstoffatom und mindestens einer Amidgruppe eingesetzt werden.

4. Verfahren nach Anspruch 3, dadurch gekennzeichnet, daß als Co-Katalysator (B) Formylierungsprodukte der Verbindungen (A) der allgemeinen Formeln (1) bis (4) aus Anspruch 1 und/oder die Verbindungen

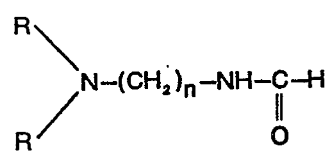

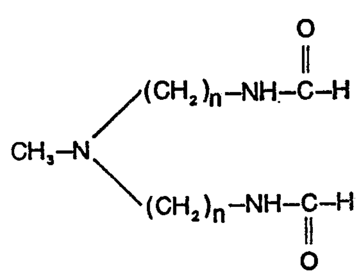

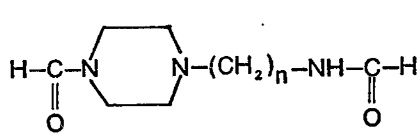

und/oder

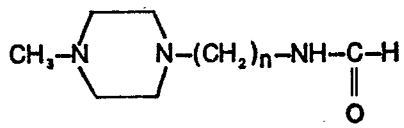

eingesetzt werden,
wobei R und n die in Anspruch 1 angegebene Bedeutung haben.

5. Verfahren nach Anspruch 1 bis 4, dadurch gekennzeichnet, daß
R für eine Methylgruppe,
m für 2 und
n für 3 stehen.

**Revendications**

1. Procédé de production de matières plastiques de la classe des polyuréthannes, éventuellement cellulaires, par réaction
(a) de polyisocyanates avec
(b) des composés portant au moins deux atomes d'hydrogène réactifs envers les isocyanates, en présence
(c) d'amines tertiaires utilisées comme catalyseurs, qui portent des atomes d'hydrogène réactifs envers les isocyanates, éventuellement en présence
(d) de propulseurs, d'agents stabilisants et d'autres additifs connus, caractérisé en ce qu'il consiste à utiliser comme composants (c)
(A) des composés de formules générales:

(1)

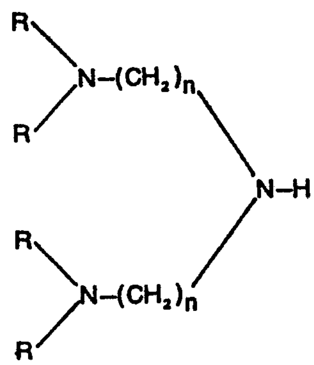

et / ou

(2)

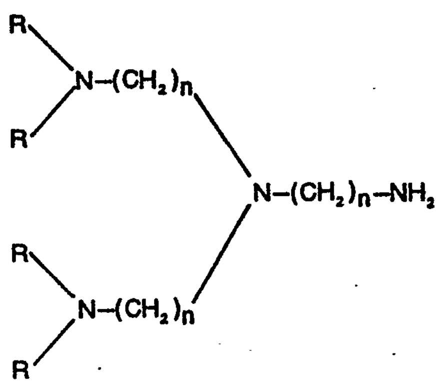

et / ou

(3) 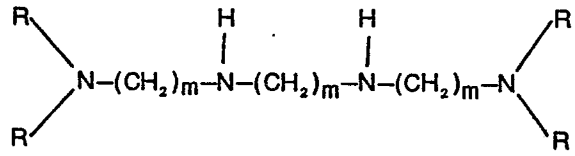

et/ou

(4) 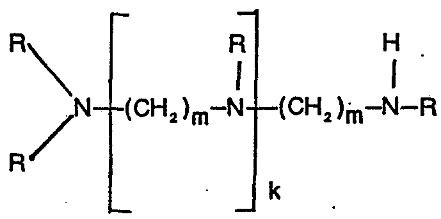

le cas échéant en mélange avec une proportion allant jusqu'à 97 moles%, par rapport au mélange catalyseur total, d'autres amines tertiaires (B), les restes R représentant, indépendamment les uns des autres, des groupes alkyle éventuellement ramifiés ayant 1 à 4 atomes de carbone, les nombres *n* étant, indépendamment les uns des autres, égaux à 2 ou 3, les nombres *m* étant, indépendamment les uns des autres, égaux à 2 ou 3, et *k* étant un nombre entier ayant une valeur de 1 à 5.

2. Procédé suivant la revendication 1, caractérisé en ce qu'il consiste à utiliser 30 à 70 moles% de cocatalyseurs B par rapport au mélange catalyseur total.

3. Procédé suivant l'une des revendications 1 et 2, caractérisé en ce qu'il consiste à utiliser comme cocatalyseur (B) des composés portant au moins un atome tertiaire d'azote et au moins un groupe amido.

4. Procédé suivant la revendication 3, caractérisé en ce qu'il consiste à utiliser comme cocatalyseur (B) des produits de formylation des composés (A) de formules générales (1) à (4) suivant la revendication 1 et/ou les composés:

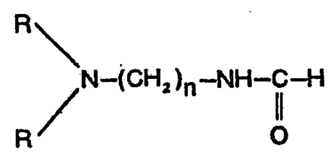

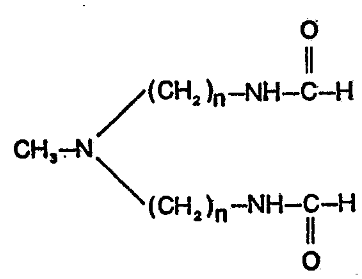

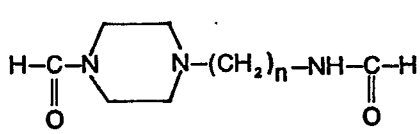

et / ou

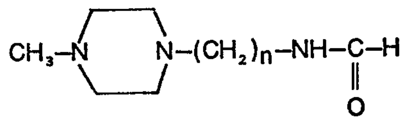

R et *n* ayant les définitions données dans la revendication 1.

5. Procédé suivant l'une quelconque des revendications 1 à 4, caractérisé en ce que R est un groupe méthyle, *m* est égal à 2 et *n* est égal à 3.

**Claims**

1. Process for the production of optionally cellular polyurethane resins by the reaction of:
   (a) polyisocyanates, with
   (b) compounds having at least 2 isocyanate reactive hydrogen atoms, in the presence of
   (c) tertiary amines containing isocyanate reactive hydrogen atoms, as catalysts, optionally with the addition of
   (d) blowing agents, stabilizers and other known additives; characterised in that the compounds used as a component (c) are:
   (A) compounds of the general formula

(1)

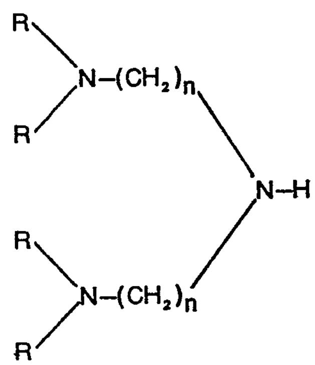

and / or

(2)

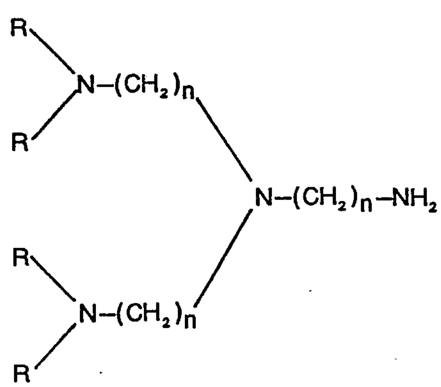

and / or

(3)

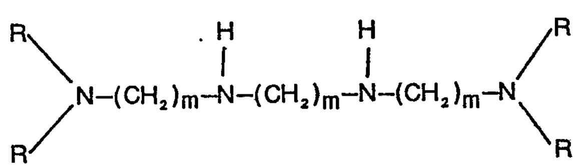

and / or

(4) 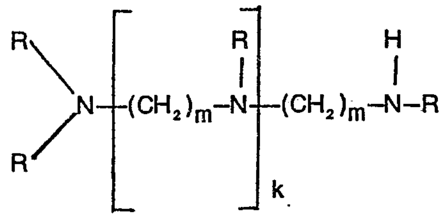

optionally as mixtures with up to 97 mol%, based on the whole catalyst mixture, or other tertiary amines (B), in which formulae:

the radicals R represent, independently of each other, optionally branched-chain alkyl groups having from 1 to 4 carbon atoms,
the figures n represent, independently of each other, 2 or 3;
the figures m represent, independently of each other, 2 or 3; and
K represents an integer of from 1 to 5.

2. Process according to claim 1, characterised in that from 30 to 70 mol% based on the whole catalyst mixture, of co-catalysts (B) are used.

3. Process according to claim 1 or 2, characterised in that the compounds used as co-catalysts (B) have at least one tertiary nitrogen atom and at least one amide group.

4. Process according to claim 3, characterised in that the compounds used as co-catalysts (B) are formylation products of the compounds (A) of the general formulae (1) to (4) in claim 1 and/or the compounds:

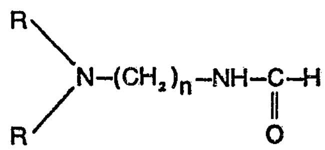

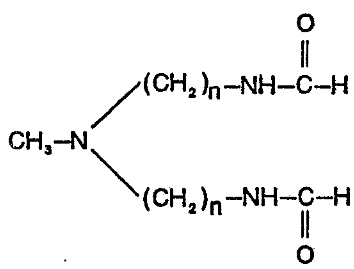

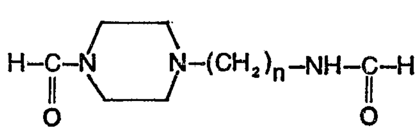

and / or

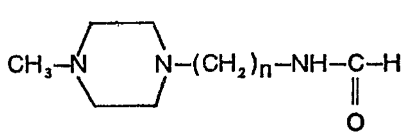

wherein R and n are as defined in claim 1.

5. Process according to claims 1 to 4 characterised in that:
R represents a methyl group,
m represents 2 and
n represents 3.